# EUROPÄISCHE PATENTANMELDUNG

(11) **EP 1 491 864 A2**
(43) Veröffentlichungstag der Anmeldung: **29.12.2004**
(21) Anmeldenummer: 04090188.6
(22) Anmeldetag: 11.05.2004
(51) Int. Cl.: G01D 18/00

(54) **Verfahren und Vorrichtung zur Funktionsprüfung eines induktiven Sensors**

(30) Priorität: 26.06.2003 DE 10329975
(71) Anmelder: SIEMENS AKTIENGESELLSCHAFT, 80333 München (DE)
(72) Erfinder: Temming, Rudolf, 38154 Königslutter (DE)

(57) **Zusammenfassung**

Die Erfindung betrifft ein Verfahren und eine Vorrichtung zur Funktionsprüfung eines induktiven Sensors (1), der zur Erfassung vorbeilaufender Metallkörper (6), insbesondere Eisenbahnräder, vorgesehen ist, wobei in eine gleisseitige Schwingkreis-Spule (2) ein hochfrequentes magnetisches wechselfeld induziert wird, welches durch die Metallkörper (6) dämpfbar ist, wobei die Dämpfung detektiert wird. Ein signaltechnisch sicherer induktiver Sensor ist dadurch gekennzeichnet, dass in den zeitlichen Lücken (14) zwischen den Dämpfungen durch die Metallkörper (6) zyklisch Test-Dämpfungen durch dafür vorgesehene Mittel erzeugt und detektiert werden. Die Mittel können eine Dämpfungs-Spule (11) beinhalten, welche derart mittels einer Prüfeinrichtung (12) kurzschließbar ist und die Schwingkreis-Spule (2) beaufschlagt, dass Test-Dämpfungen erzeugbar und detektierbar sind.

## Beschreibung

Die Erfindung betrifft ein Verfahren zur Funktionsprüfung eines induktiven Sensors gemäß dem Oberbegriff des Anspruchs 1 sowie eine Vorrichtung zur Durchführung des Verfahrens gemäß dem Oberbegriff des Anspruchs 3.

Für die Erfassung vorbeilaufender Metallkörper, beispielsweise Eisenbahnräder für Gleisfreimeldezwecke mittels Achszählung, sind im Wesentlichen elektromechanische oder induktive Verfahren gebräuchlich.

Erstere enthalten elektromechanische Kontakte, welche naturgemäß erheblichen Verschleißerscheinungen unterliegen. Die Kontaktoberflächen werden durch aggressive Luft, Feuchtigkeit und Frost angegriffen. Bei kleinen Strömen ist die Kontaktgabe nicht gesichert. Außerdem wird die Kontaktgabe bereits durch leichte Verunreinigungen der Kontaktoberflächen negativ beeinflusst. Kontakte, die sicherungstechnischen Anforderungen genügen müssen, wie beispielsweise zur Erfassung vorbeilaufender Eisenbahnräder, sind in der Regel zwangsgeführt.

Mit induktiven Verfahren können elektrisch leitende Materialien, z. B. Eisenbahnräder, erfasst werden. Ein induktiver Sensor, der auch als Näherungsschalter bezeichnet wird, besteht im Wesentlichen aus einer Schwingkreis-Spule mit Ferrit-Kern, einem Oszillator, einer Signalbewertung und einem Schaltverstärker. Der Oszillator erzeugt in der Schwingkreis-Spule ein hochfrequentes elektromagnetisches Wechselfeld. Dieses Feld tritt aus der Schwingkreis-Spule in Form von Feldlinien aus, wobei das Feld durch den Ferrit-Kern gebündelt und ausgerichtet wird. Wenn die austretenden Feldlinien Metall, beispielsweise ein Eisenbahnrad, durchsetzen, werden in dieses Metall Wirbelströme induziert, wodurch dem elektromagnetischen Wechselfeld Energie entzogen wird. Der Energieverlust bewirkt eine Dämpfung der Oszillator-Schwingung, die von der Signalbewertung registriert wird. Übersteigt die Dämpfung ein bestimmtes Maß, ändert der Schaltverstärker seinen Ausgangszustand, beispielsweise von Aus in Ein. Entfernt sich das Metall wieder aus dem Erfassungsbereich des induktiven Sensors, nimmt der Schaltverstärker wieder seinen ursprünglichen Zustand ein. Ein solcher induktiver Sensor gilt nicht als signaltechnisch sicher, da nicht hinreichend sichergestellt ist, dass Fehlfunktionen oder Funktionsausfall sofort erkannt werden können.

Der Erfindung liegt daher die Aufgabe zugrunde, ein Verfahren zur Funktionsprüfung eines induktiven Sensors und eine diesbezüglichen Vorrichtung anzugeben, welche die Verwendung induktiver Sensoren in sicherungstechnischen Anlagen zulassungsfähig macht.

Erfindungsgemäß wird die Aufgabe durch die kennzeichnenden Merkmale des Anspruchs 1 für ein Verfahren und durch die kennzeichnenden Merkmale des Anspruchs 3 für eine Vorrichtung gelöst.

Durch die quasi künstliche Erzeugung von Dämpfungserscheinungen zwischen den Dämpfungen durch die Metallkörper, beispielsweise die Eisenmasse der Eisenbahnräder, ergibt sich die Möglichkeit, die korrekte Funktionsweise des induktiven Sensors zu überprüfen. Bei einer Anomalie können sofort Gegenmaßnahmen eingeleitet werden. Letztlich wird durch die Detektion von Test-Dämpfungen bei induktiven Sensoren die Sicherheit, beispielsweise im Eisenbahnverkehr, weiter erhöht.

Um zuverlässig zu vermeiden, dass Test-Dämpfungen mit den Dämpfungen durch die Metallkörper verwechselt werden und somit bei der Achszählung zu Zählfehlern führen können, ist gemäß Anspruch 2 vorgesehen, dass die Test-Dämpfungen durch spezifische Merkmale, insbesondere Dauer und/oder Wiederholungsfrequenz, gekennzeichnet sind.

Gemäß Anspruch 3 ist bei einer Vorrichtung zur Durchführung des Verfahrens eine mittels einer Prüfeinrichtung kurzschließbare Dämpfungs-Spule vorgesehen, welche die Schwingkreis-Spule derart beaufschlagt, dass Test-Dämpfungen erzeugbar und detektierbar sind. Die Dämpfungs-Spule kann dazu als zweite Wicklung der Schwingkreis-Spule ausgebildet sein. Die Prüfeinrichtung schließt diese Doppel-Spule kurz, so dass der Schwingkreis elektrisch gedämpft wird. Auf diese Weise kann die Funktionsfähigkeit des induktiven Sensors zyklisch überprüft werden.

Vorzugsweise wird die Prüfeinrichtung gemäß Anspruch 4 durch einen sicheren Rechner angesteuert, der auch zur Detektion der Test-Dämpfungen und der Dämpfungen durch die Metallkörper vorgesehen ist. Der sichere Rechner kann dabei Teil einer Inneneinrichtung einer Überwachungszentrale oder eines Stellwerkes sein und mehrere Kilometer Abstand von dem induktiven Sensor an der Außenanlage haben.

Nachfolgend wird die Erfindung anhand eines figürlich dargestellten Ausführungsbeispiels näher erläutert. Es zeigen:
- Figur 1: die wesentlichen Baugruppen eines überprüfbaren induktiven Sensors und
- Figur 2: eine Zeitfensterdarstellung für die Überprüfung mittels Test-Dämpfungen.

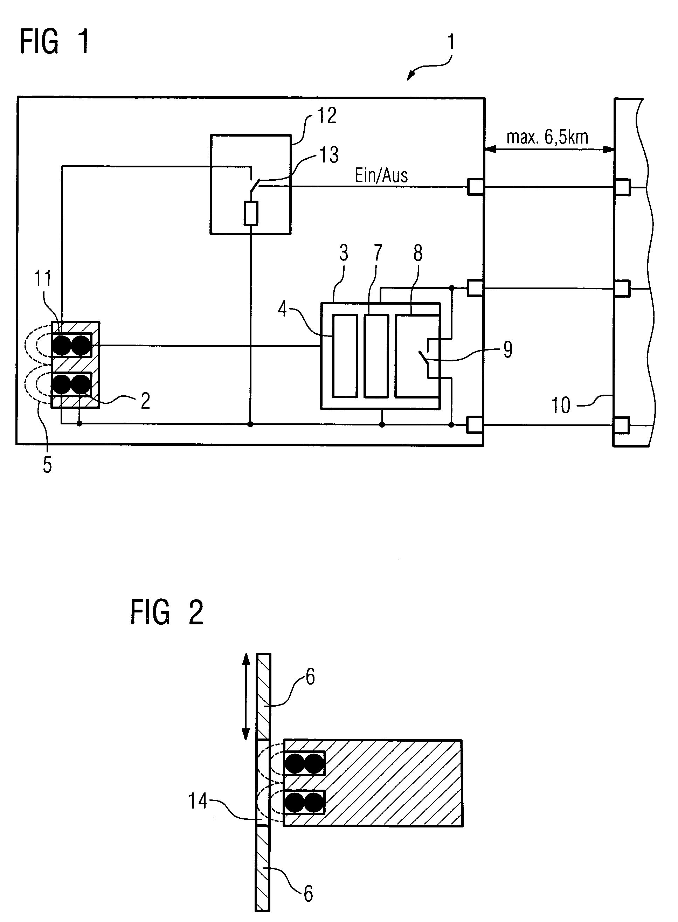

Ein induktiver Sensor 1 besteht im Wesentlichen aus einer Schwingkreis-Spule 2 und einem Sensor-IC 3. Der Sensor-IC 3 weist einen Oszillator 4 auf, welcher in die Schwingkreis-Spule 2 ein hochfrequentes magnetisches Wechselfeld induziert. Das Wechselfeld ist durch Magnetfeldlinien 5 veranschaulicht. Ein in den Einflussbereich der Magnetfeldlinien 5 gelangender Metallkörper 6, beispielsweise ein Eisenbahnrad, (Figur 2) bewirkt eine Dämpfung des magnetischen Wechselfeldes, wobei diese Dämpfung durch eine Auswerteschaltung 7 des Sensor-IC 3 detektierbar ist. Ein Schaltverstärker 8 des Sensor-IC 3 ist mit der Auswerteschaltung 7 verbunden und beaufschlagt einen Ein/Aus-Schalter 9, dessen Ausgangssignal an einen sicheren Rechner 10 weitergeleitet wird. Um die Funktionsfähigkeit des induktiven Sensors 1 zyklisch überprüfen zu können, sind zusätzlich eine Dämpfungs-Spule 11 und eine Prüfeinrichtung 12 vorgesehen. Die Dämpfungs-Spule 11 ist als zweite Wicklung der Schwingkreis-Spule 2 ausgebildet und beeinflusst den Dämpfungsgrad der Schwingkreis-Spule 2, wenn die Spule 2/11 durch einen von dem sicheren Rechner 10 ansteuerbaren Schalter 13 der Prüfeinrichtung 12 kurzgeschlossen wird. Die dann resultierende Dämpfung wird durch die Auswerteschaltung 7 des Sensor-IC 3 registriert. Auf diese Weise kann in den zeitlichen Lücken 14 (Figur 2) zwischen den Dämpfungen durch die Metallkörper 6 eine zyklische Überprüfung der Sensorfunktion durchgeführt werden. Die Art der durch die Dämpfungs-Spule 11 künstlich hervorgerufenen Dämpfung kann sich von der Dämpfung durch die Metallkörper 6 z. B. durch Dauer und/oder Wiederholungsfrequenz unterscheiden.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Funktionsprüfung eines induktiven Sensors (1), der zur Erfassung vorbeilaufender Metallkörper (6), insbesondere Eisenbahnräder, vorgesehen ist, wobei in eine gleisseitige Schwingkreis-Spule (2) ein hochfrequentes magnetisches Wechselfeld induziert wird, welches durch die Metallkörper (6) dämpfbar ist, wobei die Dämpfung detektiert wird,
**dadurch gekennzeichnet,**
**dass** in den zeitlichen Lücken (14) zwischen den Dämpfungen durch die Metallkörper (6) zyklisch Test-Dämpfungen durch dafür vorgesehene Mittel erzeugt und detektiert werden.

2. Verfahren nach Anspruch 1,
**dadurch gekennzeichnet,**
**dass** sich die Test-Dämpfungen hinsichtlich ihrer Dauer und/oder Wiederholungsfrequenz von den Dämpfungen durch Eisenbahnräder (6) unterscheiden.

3. Vorrichtung zur Durchführung des Verfahrens nach einem der vorangehenden Ansprüche,
**dadurch gekennzeichnet,**
**dass** eine Dämpfungs-Spule (11) vorgesehen ist, welche derart mittels einer Prüfeinrichtung (12) kurzschließbar ist und die Schwingkreis-Spule (2) beaufschlagt, dass Test-Dämpfungen erzeugbar und detektierbar sind.

4. Vorrichtung nach Anspruch 3,
**dadurch gekennzeichnet,**
**dass** ein sicherer Rechner (10) zur Ansteuerung der Prüfeinrichtung (12) und zur Detektion der Test-Dämpfungen und der Dämpfungen durch die Metallkörper (6) vorgesehen ist.
